# EUROPEAN PATENT SPECIFICATION

(11) **EP 1 639 292 B1**
(45) Date of publication and mention of the grant of the patent: **24.10.2007**
(21) Application number: 04756665.8
(22) Date of filing: 02.07.2004
(51) Int. Cl.: F21S 8/00, F21V 23/00, H05B 35/00

(54) **LAMP AND BULB FOR ILLUMINATION AND AMBIANCE LIGHTING**
LAMPE UND GLÜHBIRNE FÜR BELICHTUNG UND UMGEBUNGSBELEUCHTUNG
LAMPE ET AMPOULE D'ECLAIRAGE ET ECLAIRAGE D'AMBIANCE

(30) Priority: 02.07.2003 US 483913 P
(43) Date of publication of application: 29.03.2006
(73) Proprietor: S.C. JOHNSON & SON, INC., Racine, Wisconsin 53403-5011 (US)
(72) Inventor: JOHNSON, Fisk H. III, Racine, WI 53403 (US); PORCHIA, Jose, Greenfield, WI 53228 (US); CALPINO, Barry T., Racine, WI 53402 (US); WOLF, Jeffrey J., Racine, WI 53406 (US)
(74) Representative: Ruschke, Hans Edvard
(86) International application number: PCT/US2004/021532
(87) International publication number: WO 2005/003625

(56) References cited:
- WO-A-02/062106
- DE-A- 10 011 077
- GB-A- 2 239 306
- US-A- 4 677 533
- US-A- 5 984 494

## Description

### BACKGROUND OF THE INVENTION

### Field of the Invention

Our invention relates to novel lighting devices which provide light for illumination as well as ambient light.

### Description of the Related Art

Electric lamps, and the light bulbs used therein, which provide illumination are well known and are widely used. These lamps and bulbs fall into two general categories, namely, incandescent and fluorescent. More recent developments in lighting have led to advancement in light emitting diodes (LEDs). An LED is a semiconductor device that emits visible light when an electrical current passes through it. The light from an LED is basically monochromatic and the color of the light is determined by the particular material used in the semiconductor (although current applied to the LED can be used to vary the perceived color). LEDs have the advantage of low power requirements, high efficiency and long life. The outputs of several different color LEDs can be mixed so as to produce additional colors, including white light, and different brightness. LEDs can also be used to provide background lighting to achieve desired ambient effects. However, they have limited brightness and therefore they are generally not suitable for illumination purposes. Instead, LEDs have been generally used for such applications as indicator lights, panel backlighting and fiber optic data transmission.

U.S. Patent No. 6,149,283 discloses an LED lamp/bulb having a multicolor adjustor. This device comprises a base in which several LEDs capable of producing different colored light are mounted. Adjustable switches are provided for the different color LEDs so that the colors can be mixed in any desired ratio to produce desired lighting effects such as varying colors, including white light, and varying brightness. This patent acknowledges that the lumen output of LEDs is not as high as an incandescent source of the identical wattage.

U.S. Patent No. 5,924,784 discloses providing ambient light (simulating a candle flame) from both a free-standing lamp and an Edison-style light bulb (i.e., a screw-in bulb that mates with a conventional light bulb socket) using LEDs. The flame simulation is provided through both color combinations emitted and flicker effects. The patent states that it is directed to bulbs and lamps used for achieving soothing effects in memorials and the like.

U.S. Patents No. 6,016,038, No. 6,150,774, No. 6,166,496, No. 6,211,626, No. 6,292,901 and No. 6,340,868 disclose various techniques and electrical circuits for controlling the light output of several LEDs according to predetermined programs.

Document DE 100 11 077 shows a lamp in which two rings of LED's are set in the lamp holder, so as to shine up against the neck/ shoulder of the light bulb. The outer ring contains 20 blue LED's and the inner ring contains 14 green LED's. The green LED's, when illuminated give the light bulb a green tinge. Similarly, when the blue LED's are active the light bulb has a blue tinge. The LED's and the lamp are controllable via a 3-channel remote control unit. A similar application for LED's is shown in document US 4,677,533, where rings of LED's surround a normal incandescent lamp for the purpose of giving the light a slight colored shade for the comfort of a reader. The lamp and two rings of LED's are individually controllable via variable resistors. In document WO 02/062106 on which the pre-characterizing part of claim 1 is based, t here is shown a fluorescent lamp mounted on a base within a translucent housing. The lamp is surrounded by LED's. The assembly can be operated as a normal lamp by energizing the fluorescent lamp, or as night or orientation lamp by energizing only the LED. The entire assembly is adapted to fit a normal light bulb socket and be powered therefrom.

Document WO 02/062106 shows a light bulb which comprises a compact fluorescent bulb which produces white light and a plurality of LEDs which emit light from a different color, a control circuit for power supply is mounted in the light bulb socket.

### SUMMARY OF THE INVENTION

This invention which is defined in claim 1 below makes possible the provision of desired ambient or background light together with illumination light in a single lamp fixture or light bulb.

According to one embodiment of our invention, there is provided a novel electrical lamp which includes an illumination socket for mounting an illumination bulb which emits illumination light, a plurality of light emitting diodes which emit light of different colors, a base in which the illumination socket and the light emitting diodes are positioned in proximity to each other, a first electrical circuit connected to supply electrical power to the illumination socket, a second electrical circuit connected to supply electrical power to the light emitting diodes, and switching means connected to selectively switch the application of electrical power between the first electrical circuit and the second electrical circuit. The illumination socket is a socket for mounting an illumination bulb selected from the group consisting essentially of incandescent bulbs, fluorescent bulbs and halogen bulbs.

In another embodiment, our invention is directed to a light bulb. The bulb includes an illumination source which emits illumination light, a plurality of light emitting diodes which emit light of different colors, a base on which the illumination source and plurality of light emitting diodes are mounted in proximity to each other, a first electrical circuit connected to supply electrical power to the socket, a second electrical circuit connected to supply electrical power to the light emitting diodes, and a switch connected to.selectively switch the application of electrical power between the first electrical circuit and second electrical circuit. Also, the illumination source is selected from the group consisting essentially of incandescent bulbs, fluorescent bulbs and halogen bulbs. (When we talk about such conventional "bulbs" used in connection with the lamps and bulbs according to our invention, the conventional "bulbs" may include replaceable screw-in bulbs and the like, as well as more permanent light emitting devices mounted in bulbs or lamps of our invention.)

In another embodiment, our invention is directed to a light bulb having a base configured to mate with a light bulb socket. At least one compact fluorescent bulb is mounted on the base. Also, a plurality of light emitting diodes are mounted on the base, which LEDs emit light of different colors. A control circuit supplies power from the light socket, when the base is mounted therein, to the at least one fluorescent bulb and the plurality of light emitting diodes. A translucent housing is mounted on the base and contains the at least one fluorescent bulb and the plurality of light emitting diodes.

In yet another embodiment, our invention is directed to a light bulb having a base configured to mate with a light bulb socket. A light emitting device is mounted on and receives power from the base. The light emitting device is selected from the group consisting essentially of halogen, incandescent, fluorescent, and low vapor mercury light emitting devices. A plurality of light emitting diodes are also mounted on and receive power from the base. The plurality of light emitting diodes emit light of different colors. A programmable processor controls the activation, color and intensity of the light emitted from the plurality of the light emitting diodes. Again, a translucent housing is mounted on the base and contains the light emitting device and the plurality of light emitting diodes.

In another embodiment, our invention is directed to a light bulb having a base configured to mate with a light bulb socket. A light emitting device is mounted on and receives power from the base. The light emitting device is selected from the group consisting essentially of halogen, incandescent, fluorescent, and low vapor mercury light emitting devices. A plurality of light emitting diodes are mounted on and receive power from the base. The plurality of light emitting diodes emit light of different colors. A user interface controls the activation, color and intensity of the light emitted from the plurality of the light emitting diodes. Further, a translucent housing is mounted on the base and contains the light emitting device and the plurality of light emitting diodes.

### BRIEF DESCRIPTION OF THE DRAWINGS

Fig. 1 is a diagrammatic elevational sectional view of a lamp according to one embodiment of our invention;

Fig. 2 is a sectional view along line 2-2 of Fig. 1;

Fig. 3 is a diagrammatic elevational sectional view of an Edison-style light bulb according to another embodiment of our invention;

Fig. 4 is a sectional view along line 4-4 of Fig. 3; and

Fig. 5 is a diagrammatic elevational sectional view of an Edison-style light bulb according to another embodiment of our invention.

Figs. 6A and 6B are a cross-sectional and top view, respectively, of another bulb according to an embodiment of our invention.

Fig. 7 is a perspective view of another bulb according to another embodiment of our invention.

Fig. 8 is a side view of the bulb shown in Fig. 7.

Fig. 9 is a partially exploded view of the bulb shown in Figs. 8 and 9.

### DETAILED DESCRIPTION OF THE PREFERRED EMBODIMENT

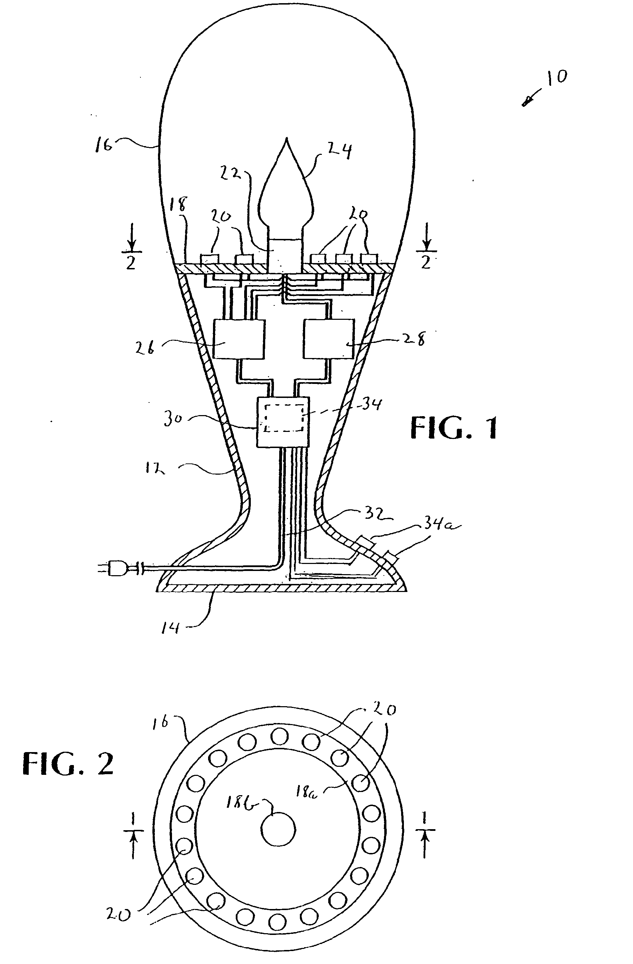

As shown in Fig. 1, a lamp 10 according to one embodiment of our invention includes a base 12 having a flat bottom 14, which may rest on a horizontal surface, such as a table top or a desk, and a translucent shade 16, which extends up from the base and which permits light generated therein to be emitted out from the lamp. The base 12 includes a bulb support 18 near its upper end. The bulb support 18 serves as a mounting for a plurality of light emitting diodes (LEDs) 20 as well as a socket 22 for an illumination bulb 24, which may be, for example, a conventional, screw-in incandescent bulb. As can be seen, the LEDs 20 and the illumination bulb 24 are positioned so that light generated from these devices can be emitted through the shade 16.

The bulb support 18, as shown in Fig. 2, has an outer portion 18a in the form of a ring; and the LEDs 20 are distributed around this outer portion. The bulb support 18 also includes a center portion 18b which supports the illumination bulb socket 22.

A first electrical circuit 26 is provided in the base 12 and is connected to supply electrical power to each of the LEDs 20. A second electrical circuit 28, also provided in the base 12, is connected to supply electrical power to the illumination bulb socket 22. A switch circuit 30 is also provided in the base 12 and is connected to supply electrical power to the first and second electrical circuits 26 and 28. The switch circuit 30 is connected to a power line 32, which may receive electrical power from a battery (not shown) contained within the lamp base 12, or from an outside source such as a household electrical output.

The switch circuit 30 includes a program control unit 34, which is configured to switch electrical power to the first and second electrical circuits 26 and 28 as desired, i.e., either to both simultaneously or to each alternately, depending on the type of light to be produced by the lamp 10. The program control unit includes control switch actuators 34, which are located on the base 12 for manual adjustment of the output intensity or brightness of the LEDs 20 and of the illumination bulb 24. The program control unit 34 may also incorporate an internal program and associated circuits which provide adjustment of the LEDs 20 and the illumination bulb 24 in a predetermined manner. This can provide selectable light shows among which a user may choose. In addition, sensors (not shown) may be provided to sense other conditions in the area of the lamp 10, e.g., temperature, scent, sound, motion, etc., and to adjust the program in the program control unit 34 so as to coordinate the light outputs from the lamp 10 with such sensed conditions.

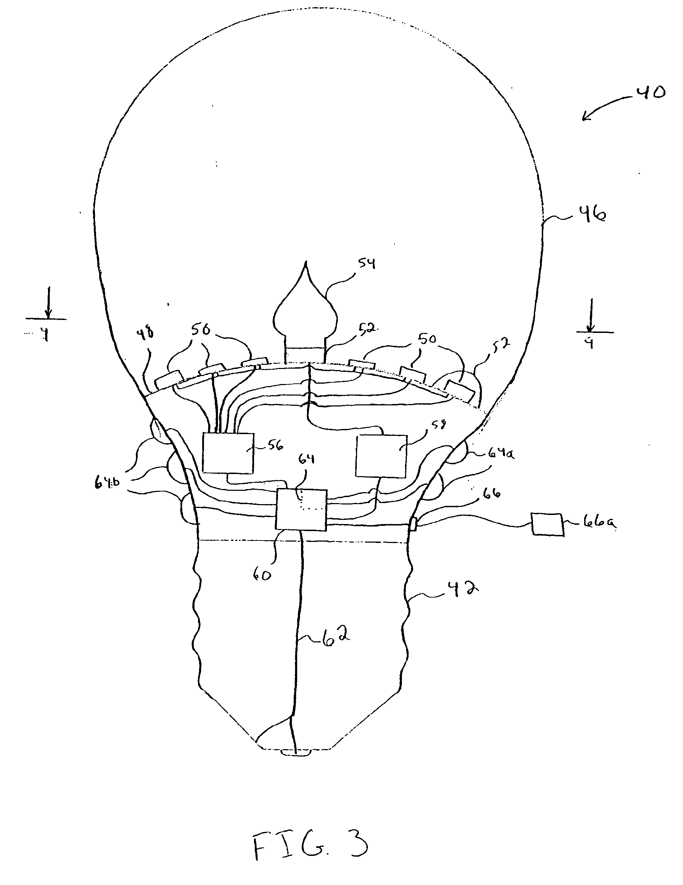

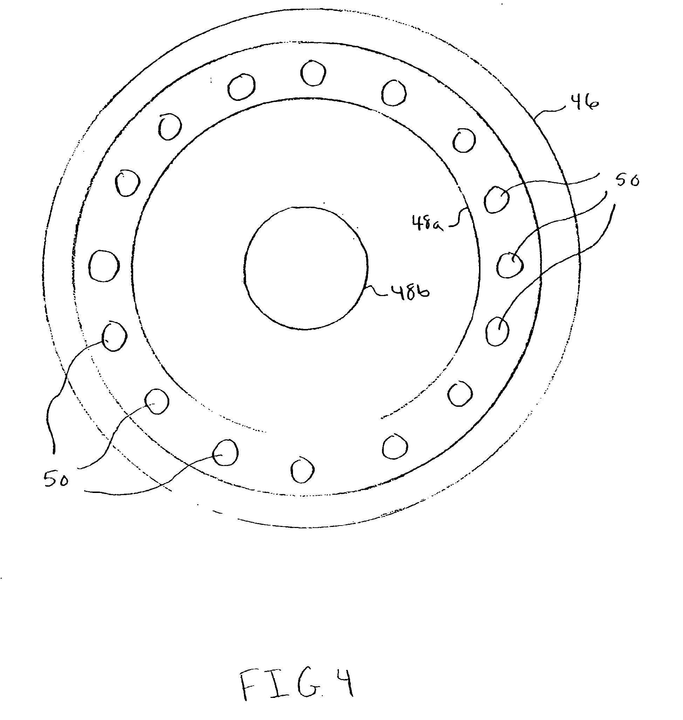

As shown in Fig. 3, an Edison-style light bulb 40 according to another embodiment of the invention includes a threaded, Edison-style base 42 for use with conventional light bulb sockets. (Of course, the bulb may be configured to mount in other conventional sockets for mounting light bulbs, such as fluorescent and halogen.) A translucent housing 46 extends up from base 42. The translucent housing 46 allows light generated therein to be emitted from the bulb.

A lighting support 48 is positioned within housing 46, and serves as a mounting for a plurality of LEDs 50 and an illumination source mounting socket 52. Socket 52 mounts, and provides power to, an incandescent illumination source 54. Light generated by the LEDs 50 and illumination source 54 is emitted through housing 46. Housing 46 may be releasably secured to base 42, to allow for replacement of illumination source 54.

The light source support 48, as shown in Figure 4, has an outer portion 48a in the form of a ring. The LEDs 50 are distributed around this outer portion. The light source support 48 also includes a center portion 48b which supports socket 52, or the illumination source 54, when the illumination source 54 is fixedly mounted on support 48 without a socket. A socket is preferably used in order to allow for replacement of burned out illumination sources, since the LEDs 56 are expected to outlast any conventional illumination source.

A first electrical circuit 56 is connected to supply electrical power to each of the LEDs 50. A second electrical circuit 58 is connected to supply electrical power to illumination source 54. Also provided is a switch circuit 60, which is connected to supply electrical power to the first and second electrical circuits 56 and 58. The switch circuit 60 is connected to power supply line 62, which receives electrical power from an Edison-style light bulb socket when mounted thereon. The switch circuit 60 includes a program control unit 64, which is configured to switch electrical power to the first and second electrical circuits 56 and 58 as desired, depending on the type of light to be produced. The program control unit 64 includes control switch actuators 64a, which are located on the outside of housing 46. The control switch actuators 64a provide for switching between different modes of light presentation, i.e., activating either one of first and second electrical circuits 56 and 58, or activating both simultaneously. The program control unit 64 also includes switch actuators 64b, also located on the outside housing 46, for manual adjustment of, for example, the output intensity or brightness of the LEDs 50 and illumination source 54, pre-programmed light shows using the LEDs 50, the color of the light provided by the LEDs 50, etc. The control switch actuators 64b may operate by controlling internal programs and associated circuits of program control unit 64. In addition, any one of a number of control mechanisms may be used in keeping with the present invention including microprocessors, mechanical activity devices, software driven control, and the like.

Also, we have referred to the depicted LEDs 50 as separate light emitting diodes; however, the depicted LEDs 50 may also be individual groups of light emitting diodes. For instance, a single LED group 50 may include three individual light emitting diodes specific to colors red, green, and blue, respectively. With such a configuration, the program control unit 64 may individually set the relative intensity of each of the light emitting diodes of each group so as to control the color emitted from those groups, i.e., the color emitted from a depicted LED group 50 may be varied based on the combination of colors from the individual light emitting diodes of the group. A user may perceive the combined color by way of positioning the individual diodes of an LED group 50 so closely together as to produce an overall color effect, or alternatively, a translucent shade (e.g., a diffuser) 52 may be provided to cover each LED 50, thus providing for a single perceived color to be emitted from each shade 52 as if it were a single pixel.

The program control unit 64 further includes a sensor input 66 for receiving signals from a sensor 66a. Sensor 66a may be provided on the light bulb 40 or at a remote location. When positioned at a remote location, signals from sensor 66a may be transmitted to the sensor input 66 by way of a direct connection or a wireless connection (i.e., radio signal, infrared signal, etc.).

Sensor 66a may sense such stimuli as temperature, sound, motion, etc. The program control unit 64 may adjust a program for operation of LEDs 50 and illumination source 54 based on the sensed conditions.

In addition, control signals may also be provided by direct connection or a wireless connection by a user, rather than a sensor. For instance, as regards direct connection, a user may simply vary the application of the power source by toggling a power switch which controls the power supply to the device with which bulb 40 is mated. In this case, the sensor input 66 may sense the power supply and change the control of the device based on the timing of the activation and deactivation of the power supply. Alternatively, a remote control may be provided so that a user may send control signals (e.g., radio signals, infrared signals, etc.) to the sensor input 66. These control options may be provided in addition to or in lieu of switches 64a and 64b.

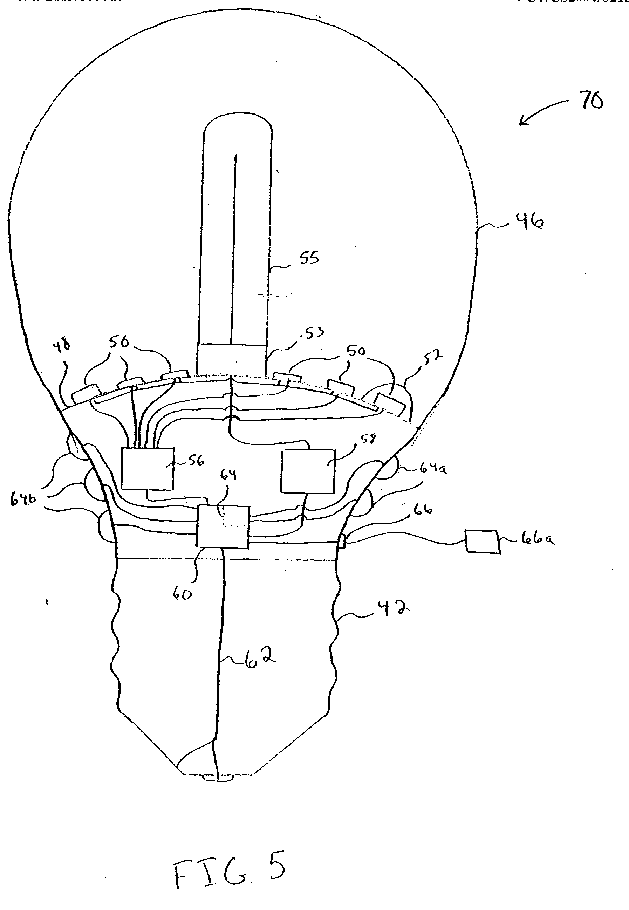

Fig. 5 shows an Edison-style light bulb 70 according to yet another embodiment of our invention. In this embodiment, a fluorescent illumination source 55 is mounted on a socket 53. Of course, the illumination may be provided in a conventional light bulb socket, which allows for replacement of the bulb, or alternatively may be a lighting device permanently affixed to a device according to our invention. The remainder of the features of light bulb 70 are similar to the like-numbered features discussed above with respect to light bulb 40, shown in Fig. 3.

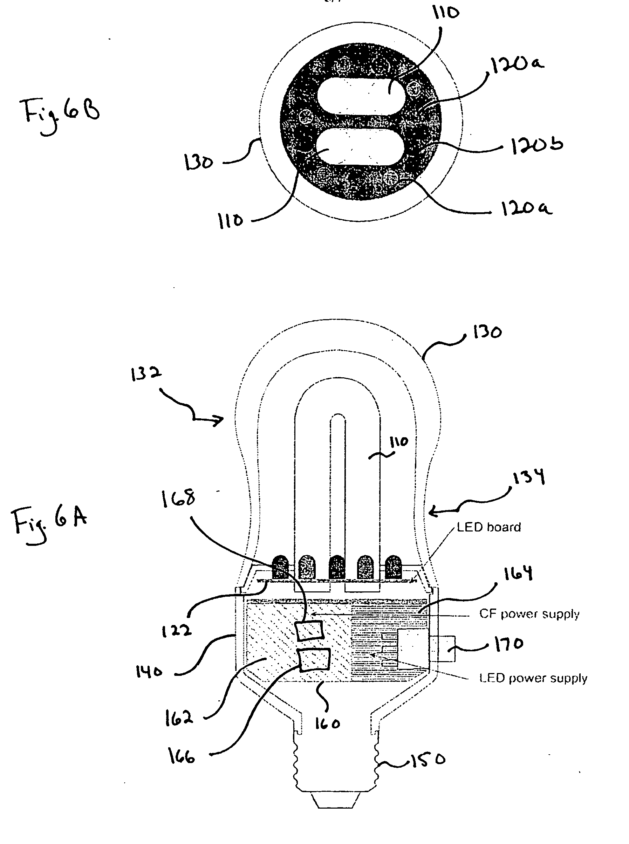

Figs. 6A and 6B show another embodiment of our invention embodied in bulb 100. Bulb 100 is similar to previous embodiments in that it includes a base 140 having a screw-in connector 150 adapted to mate with a conventional incandescent light bulb socket in a lamp or the like. Of course, connector 150 may be of any one of a number of configurations that mate with other conventional light sockets (e.g., fluorescent, halogen, etc.).

Bulb 100 also includes a translucent housing 130. Housing 130 encloses bulbs 110. While other light emitting devices may be provided to provide the bright, white light associated with conventional light bulbs, it is preferred that compact fluorescent bulbs be used. (Of course, bulbs 110 may be replaceable light bulbs, or more permanently affixed light emitting devices.) In this embodiment, we will discuss a plurality of compact fluorescent bulbs which are provided to increase the power of the bulb 100 and the overall surface area within housing 130 emitting white light (or the like).

As is shown in Fig. 6A, compact fluorescent bulbs 110 are each formed in an upside down, substantially U-shaped configuration. (Of course, other arrangements are possible while keeping with the scope of our invention). In particular, a compact fluorescent bulb 110 may have a first electrode at one end from which it extends up in a direction away from base 140, until it bends back on itself near the top of housing 130, so as to extend back toward base 140 to a second electrode at the other end. Figs. 6A and 6B show two such bulbs 110.

Alternatively, compact fluorescent bulbs 110 can be formed of a single bulb that has a plurality of separate lengths, each of which extends up from the base 140 and then bends back on itself to extend back to base 140, with the lengths being interconnected so as to have only two electrodes, each at opposite ends of the total length. More specifically, while Figs. 6A and 6B appear to show two separate U-shaped bulbs, the term plurality of compact fluorescent bulbs used within this specification can refer to a single compact fluorescent bulb that is bent multiple times to have distinct lengths, as shown in Figs. 6A and 6B.

In a most preferred embodiment, the total length of the multiple compact fluorescent bulbs 110 is in the range of about 2 to about 21 inches, whether the compact fluorescent bulbs are actually distinct bulbs, or a single bulb having a plurality of distinct lengths. Preferably, this could include about 1 inch lengths, with one bend, to about 3.5 inch lengths, with 1 to 3 bends. This provides a high surface area of light emission to provide ample light to illuminate a room or the like. Also, it should be noted that any number of shapes and configurations may be used to form compact fluorescent bulbs 110 (or other bulbs), other than the U-shaped configuration shown in the figures. For instance, spiral or helical shapes may be used.

Bulb 100 also includes a plurality of LEDs 120. Similar to embodiments discussed above, LEDs 120 are arranged on an LED board 122 so as to encircle the compact fluorescent bulbs 110. In addition, LEDs 120 include a number of different color LEDs. More specifically, as shown in this embodiment, the LEDs of different colors are arranged such that adjacent individual LEDs 120a and LEDs 120b are LEDs of different colors. With such a configuration, the different colored LEDs may be evenly spaced around the inside of housing 130 to provide a suitable light display when perceived from any side of bulb 100. As discussed above with respect to other embodiments, the LEDs may also be configured differently such that a grouping of different colored LEDs may be positioned close to each other (and optionally, covered by a light diffuser so that the group acts as a single pixel) to give increased control over the perception by a user of the colors to be emitted from housing 130. In such embodiments, LEDs 120 may be controlled to provide a more fluid, continuous change between different emitted colors (e.g., color wash). In the embodiment shown in Figs. 6A and 6B, the separation of differently colored LEDs 120a and 120b provides a more distinct and delineated change of colors, as perceived by user, in comparison with an embodiment in which a group of differently colored LEDs 120 are positioned close to each other so as to be perceived by user as a single pixel. Alternatively, the arrangement may include close groupings of LEDs, with individual LEDs or the grouping still being separately discernable.

LEDs 120, compact fluorescent bulbs 110 and LED board 122 are mounted on base 140, directly or indirectly. Base 140 includes a control circuit board 160 which includes LED power supply 164 and compact fluorescent bulb power supply 162. By providing power (and control) for these features on one board, a more compact bulb 100 is achieved. Board 160 may include conventional switches and potentiometers for controlling the functions of the LEDs 120 and fluorescent bulbs 110, as would be understood by one of ordinary skill in the art. Alternatively, separate boards may be provided for LEDs 120 and compact fluorescent bulbs 110. Electrical power is supplied to board 160 through its electrical connection (not shown) to connector 150, which receives power when mated with a conventional light socket.

Control board 160 may also include a processor 166 that may use various combinations of software and hardware to control the various lighting functions. With respect to LEDs 120, the control may involve control of the color to be emitted by LEDs 120, individually or as a group, when perceived by a user from outside of housing 130 (this may involve the use of a diffuser or the like). In addition, the control mechanisms may control the brightness of the LEDs 120. Further, the control may involve the running of predetermined lighting presentations (e.g., light shows) that vary the light color, brightness, activation, etc., over the course of the presentation to provide an entertaining lighting show. The control mechanisms may also control the compact fluorescent bulbs 110, including their brightness or activation. In preferred embodiments, the compact fluorescent bulbs 110 are activated on their own, without LEDs 120, to provide normal white light for illuminating a room or other area. The LEDs may be used separately as night lights or to provide ambience using color features or color shows that are pleasing to a user.

The light shows may be stored in a memory 168, which may also be included on the control board 160 (or integrated with processor 166). The memory 168 may include software programs for controlling the circuit board 160 and/or processor 166 to operate the predetermined presentations.

A user interface 170 is provided on base 140 so as to provide a user with control of the control board 160 and/or processor 166. The user interface may allow the user to select the colors, brightness, activation, etc. of the LEDs 120 and compact fluorescent bulbs 110. In the depicted embodiment, the user interface 170 is a button which a user can toggle to switch between different settings. In other embodiments, user interface 170 may be more elaborate (and be provided at base 140, or remote locations) so as to allow a user more sophisticated control of the operation of the bulb 100. This could include the ability to design programs including color changes, changes in brightness of various components, timed activations and/or deactivations, etc., and combinations thereof.

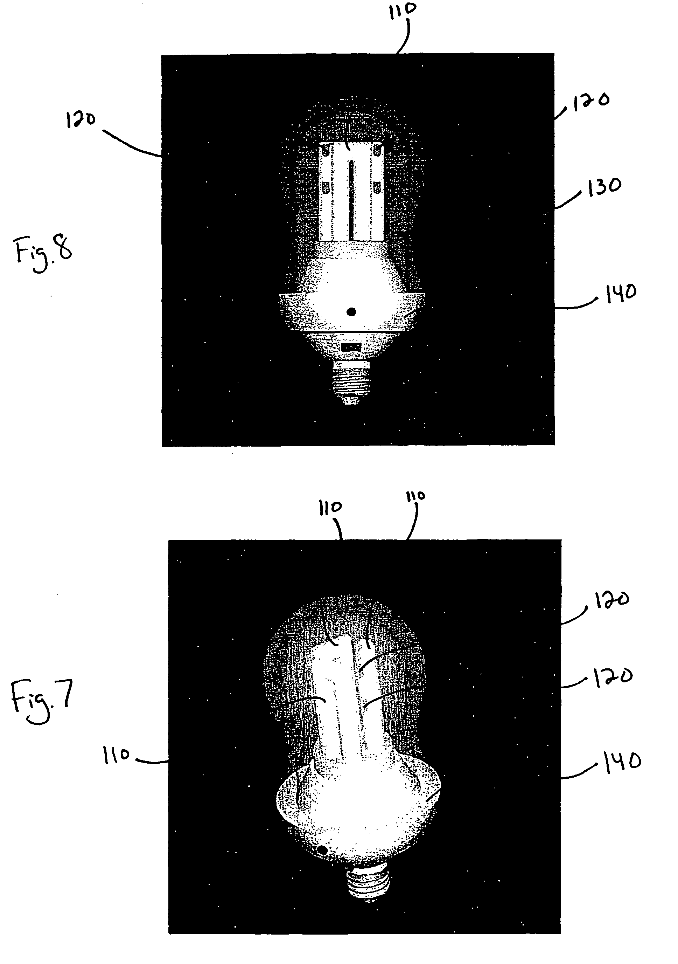

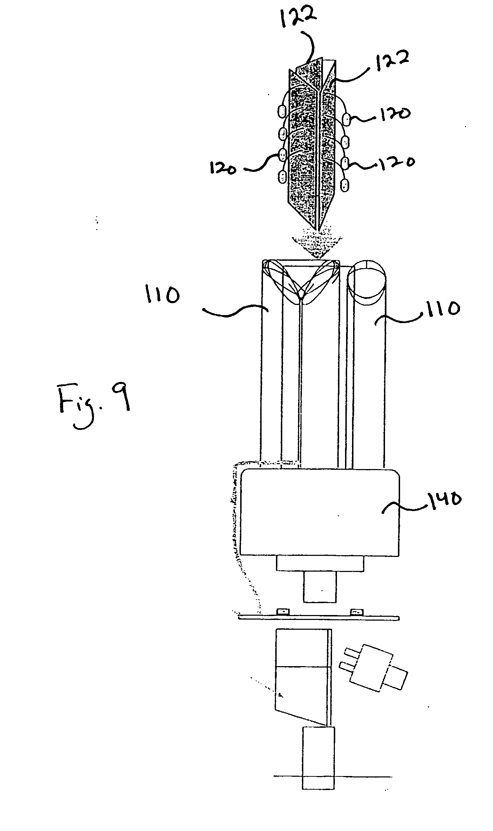

Figures 7-9 show a modification of the bulb shown in Figs. 6A and 6B. In particular, there are provided three compact fluorescent bulbs 110 (which may include three distinct fluorescent bulbs or three distinct lengths of light emission of a single fluorescent bulb). Again, the separate compact fluorescent bulbs 110 are provided so as to extend from the base 140 vertically up through the housing 130 to a position near the top thereof. In this embodiment, however, LEDs 120 are not arranged circularly around the compact fluorescent bulbs 110 near the base 140, but are arranged in vertical groupings, each grouping extending between separate compact fluorescent bulbs 110. As shown in Fig. 9, each grouping of LEDs 120 extending between adjacent compact fluorescent bulbs 110 may be secured to a separate LED board 122. This provides a slightly different lighting effect that may distribute colored light more effectively.

With the above-described various embodiments, our invention provides a bulb similar in size, shape and compatibility to conventional light bulbs, but with enhanced features and control, including colors, color changing and light shows. However, because our invention still mates with conventional light sockets, and is generally shaped similarly to that of a conventional incandescent bulb (at least in one embodiment), it may be used in existing light fixtures and accommodate conventional light shades. Specifically, housing 130 is preferably shaped/sized so as to be able to receive the connection means provided on conventional light shades to secure the same to typical light bulbs. In particular, with respect to Fig. 6A, the diameter of housing 130 at position 132 (a wider top portion of housing 130) is preferably in the range of about 1.75 to about 3.25 inches, and the diameter of housing 130 at position 134 is preferably about 1 to about 3 inches. Most preferably the of the bulb substantially complies with conventional bulb sizes A-19 (with position 132 measuring about 2.375 inches) and A-21 (with position 132 measuring about 2.625 inches).

In addition, bulb 100 preferably emits white light from compact fluorescent bulbs, or other light emission devices in a range of about 160 to about 4200 lumens; and more preferably in the range of about 240 to about 2625 lumens; and most preferably in the range of about 320 to about 2100 lumens. Also, a bulb according to our invention preferably draws power in the range of about 5 to about 200 watts; and more preferably in a range of about 15 to about 125 watts; and most preferably in a range of about 25 to about 100 watts. Consequently, our invention is designed for use in many settings where conventional bulbs would typically be used.

It should also be recognized, however, that other suitable illumination sources, such as a halogen bulb or high intensity discharge bulb, may be used to provide illumination light, as would be readily understood by one of ordinary skill in the art.

### INDUSTRIAL APPLICABILITY

This invention provides lighting for both illumination purposes and for the creation of desired ambient conditions in a single device, which may be adjusted manually to change the lighting and which may be programmed to automatically change such lighting.

## Claims

1. A light bulb (100) comprising:
a base (140) configured to mate with a light bulb socket;
a light emitting device (110) mounted on the base (140) consisting of at least one compact fluorescent bulb, or other conventional light bulb that produces a bright white light;
a plurality of light emitting diodes (120) mounted on the base (140), which emit light of different colors;
a control circuit (160) which supplies power from the light socket, when the base is mounted therein, to the light emitting device (110) and the plurality of light emitting diodes (120); and
a translucent housing (130) mounted on the base (140) and containing the light emitting device (110) and the plurality of light emitting diodes (120);
**characterized in that** the control circuit (160) includes a processor (166) connected to the plurality of light emitting diodes (120) to control the color emitted by the LED's individually when perceived by a user from outside the housing.

2. The light bulb according to claim 1, wherein the processor (166) is configured to adjust the intensities of the different color LED's in accordance with a predetermined program.

3. The light bulb according to claim 1, wherein the light-emitting device comprises a plurality of compact fluorescent bulbs (110).

4. The light bulb according to claim 1, wherein the light-emitting device is a fluorescent bulb (110) about 2 to about 21 inches in length, the fluorescent bulb being folded back on itself a plurality of times so as to form a plurality of lengths extending up from the base (140) within the housing (130).

5. The light bulb according to claim 1, wherein the plurality of light emitting diodes (120) are positioned on the base (140) so as to surround the light emitting device (110).

6. The light bulb according to claim 1, wherein the light emitting device (110) emits light within the range of about 160 to about 4200 lumens, preferably within the range of about 240 to about 2625 lumens, and more preferably within the range of about 320 to about 2100 lumens.

7. The light bulb according to claim 1, further comprising a user interface connected to the control circuit, wherein the user interface allows for programming of the color of the light to be emitted from the housing by the plurality of light emitting diodes.

8. The light bulb according to claim 1, further comprising a processor for controlling the control circuit to control the plurality of light emitting diodes to produce at least one predetermined presentation of light emission which varies, during the presentation, at least one of the color and intensity of light emitted from the housing by the plurality of light emitting diodes.

9. The light according to claim 8, wherein the light further comprises a sensor for sensing power activation so as to enable the user to remotely control the processor by toggling a power switch that controls the power through the light socket on which the bulb is mounted, or by an infrared signal or a radio signal.

## Patentansprüche

1. Leuchte (100) mit:
einem Fuß (140), der mit einer Lampenfassung zusammenführbar ist;
einer Licht abgebenden Einrichtung (110), die auf dem Fuß (140) angeordnet ist und mindestens eine kompakte Leuchtstoffröhre oder eine andere herkömmliche Lampe aufweist, die helles weißes Licht abgibt;
einer Vielzahl von Leuchtdioden (120), die auf dem Fuß (140) angeordnet sind und Licht in unterschiedlichen Farben abgeben;
einer Steuerschaltung (160), die bei eingesetztem Fuß der Licht abgebenden Einrichtung (110) und den Leuchtdioden (120) Strom aus der Lampenfassung zuführt; und
einem durchscheinenden Gehäuse (130), das auf dem Fuß (140) angeordnet ist und die Licht abgebende Einrichtung (110) und die Leuchtdioden (120) enthält;
**dadurch gekennzeichnet, dass** die Steuerschaltung (160) einen mit der Vielzahl von Leuchtdioden (120) verschalteten Prozessor (166) aufweist, mit dem die von den LEDs individuell abgegebenen Farben, die ein Nutzer außerhalb des Gehäuses wahrnimmt, steuerbar sind.

2. Leuchte nach Anspruch 1, deren Prozessor (166) konfiguriert ist, die Intensität der verschiedenfarbigen LEDs entsprechend einem vorbestimmten Programm einzustellen.

3. Leuchte nach Anspruch 1, deren Licht abgebende Einrichtung eine Vielzahl von kompakten Leuchtstoffröhren (110) aufweist.

4. Leuchte nach Anspruch 1, deren Licht abgebende Einrichtung eine Leuchtstoffröhre (110) einer Länge von etwa 2 Zoll bis etwa 21 Zoll ist, die mehrfach auf sich selbst zurückgefaltet ist, um eine Vielzahl von Abschnitten zu bilden, die vom Fuß (140) im Gehäuse (130) aufwärts ragen.

5. Leuchte nach Anspruch 1, deren Leuchtdioden (120) auf dem Fuß (140) um die Licht abgebende Einrichtung (110) herum angeordnet sind.

6. Leuchte nach Anspruch 1, deren die Licht abgebende Einrichtung (110) Licht im Bereich von etwa 160 Lumen bis etwa 4200 Lumen, vorzugsweise im Bereich von 240 Lumen bis etwa 2625 Lumen und meistbevorzugt im Bereich von etwa 320 Lumen bis etwa 2100 Lumen abgibt.

7. Leuchte nach Anspruch 1 weiterhin mit einer Nutzerschnittstelle, die an die Steuerschaltung angeschlossen ist und eine Programmierung der Lichtfarbe ermöglicht, die die Leuchtdioden aus dem Gehäuse abstrahlen sollen.

8. Leuchte nach Anspruch 1 weiterhin mit einem Prozessor, mit dem die Steuerschaltung steuerbar ist, um die Leuchtdioden zur Abgabe mindestens einer vorbestimmten Präsentation von abgestrahltem Licht zu steuern, bei der mindestens die Farbe oder die Intensität oder beide des Lichts variiert wird bzw. werden, das die Leuchtdioden aus dem Gehäuse heraus abstrahlen.

9. Leuchte nach Anspruch 8 weiterhin mit einem Sensor zum Erfassen des Einschaltzustands, damit der Nutzer den Prozessor durch Betätigen eines Stromschalters, der die Stromzufuhr zu der Fassung, in die die Lampe eingesetzt ist, oder durch ein Infrarot- oder ein Funksignal fernsteuern kann.

## Revendications

1. Ampoule d'éclairage (100) comprenant :
une base (140) configurée pour s'adapter sur une douille d'ampoule d'éclairage ;
un dispositif émetteur de lumière (110) monté sur la base (140), constitué par au moins une ampoule fluorescente compacte ou toute autre ampoule d'éclairage classique qui produit une lumière blanche brillante ;
une pluralité de diodes émettrices de lumière (120) montées sur la base (140), lesquelles émettent une lumière de différentes couleurs ;
un circuit de commande (160) qui applique de la puissance depuis la douille d'éclairage lorsque la base est montée dedans sur le dispositif émetteur de lumière (110) et la pluralité de diodes émettrices de lumière (120) ; et
un boîtier translucide (130) monté sur la base (140) et contenant le dispositif émetteur de lumière (110) et la pluralité de diodes émettrices de lumière (120),
**caractérisée en ce que** le circuit de commande (160) inclut un processeur (166) connecté à la pluralité de diodes émettrices de lumière (120) pour commander la couleur émise par les DEL individuellement, tel que perçu par un utilisateur depuis l'extérieur du boîtier.

2. Ampoule d'éclairage selon la revendication 1, dans laquelle le processeur (166) est configuré pour régler les intensités des DEL de différentes couleurs en fonction d'un programme prédéterminé.

3. Ampoule d'éclairage selon la revendication 1, dans laquelle le dispositif émetteur de lumière comprend une pluralité d'ampoules fluorescentes compactes (110).

4. Ampoule d'éclairage selon la revendication 1, dans laquelle le dispositif émetteur de lumière est une ampoule fluorescente (110) d'une longueur d'environ 2 pouces à environ 21 pouces, l'ampoule fluorescente étant repliée sur elle-même une pluralité de fois de manière à former une pluralité de longueurs s'étendant depuis la base (140) à l'intérieur du boîtier (130).

5. Ampoule d'éclairage selon la revendication 1, dans laquelle la pluralité de diodes émettrices de lumière (120) sont positionnées sur la base (140) de manière à entourer le dispositif émetteur de lumière (110).

6. Ampoule d'éclairage selon la revendication 1, dans laquelle le dispositif émetteur de lumière (110) émet de la lumière dans la plage d'environ 160 lumens à environ 4200 lumens, de préférence dans la plage d'environ 240 lumens à environ 2625 lumens et de façon davantage préférable, dans la plage d'environ 320 lumens à environ 2100 lumens.

7. Ampoule d'éclairage selon la revendication 1, comprenant en outre une interface utilisateur connectée au circuit de commande, dans laquelle l'interface utilisateur permet la programmation de la couleur de la lumière à émettre depuis le boîtier par la pluralité de diodes émettrices de lumière.

8. Ampoule d'éclairage selon la revendication 1, comprenant en outre un processeur pour commander le circuit de commande pour commander la pluralité de diodes émettrices de lumière afin de produire au moins une présentation prédéterminée d'émission de lumière qui fait varier, pendant la présentation, au moins un élément pris parmi la couleur et l'intensité de la lumière émise depuis le boîtier par la pluralité de diodes émettrices de lumière.

9. Eclairage selon la revendication 8, dans lequel l'éclairage comprend en outre un capteur pour détecter une activation de puissance de manière à permettre que l'utilisateur commande à distance le processeur en déclenchant un commutateur de puissance qui commande la puissance par l'intermédiaire de la douille d'éclairage sur laquelle l'ampoule est montée ou au moyen d'un signal infrarouge ou d'un signal radio.
